# EUROPÄISCHE PATENTANMELDUNG

(11) **EP 1 251 380 A2**
(43) Veröffentlichungstag der Anmeldung: **23.10.2002**
(21) Anmeldenummer: 02007140.3
(22) Anmeldetag: 28.03.2002
(51) Int. Cl.: G02B 7/00

(54) **Stativ, insbesondere für ein Operationsmikroskop**

(30) Priorität: 31.03.2001 DE 10123166
(71) Anmelder: Leica Microsystems AG, 9435 Heerbrugg (CH)
(72) Erfinder: Metelski, Andrzej, CH-8590 Romanshorn (CH)
(74) Vertreter: Rosenich, Paul

(57) **Zusammenfassung**

Die Erfindung betrifft ein Stativ, insbesondere für ein Operationsmikroskop, bei welchem mittels Einstellvorrichtungen am Stativ selbst, und nicht am Stativfuss **(2)**, dafür gesorgt werden kann, dass die Schwenkachse **(30)** des Tragarms **(11)** im Lot steht.

## Beschreibung

Die Erfindung betrifft ein Stativ, insbesondere für ein Operationsmikroskop. Solche Stative haben die Aufgabe, ein relativ schweres Mikroskop für eine Bedienperson möglichst widerstandsfrei bewegbar zu halten. Daher bemüht man sich, sämtliche Gelenke, Lager oder dergleichen möglichst widerstandsfrei zu gestalten, sodass bei der willkürlichen Bewegung dem Anwender möglichst kein Widerstand entgegengesetzt wird.

Die gesteigerte Leichtgängigkeit bei Stativen führt dazu, dass im Falle von Unebenheiten des Aufstellungsortes (unebene Fussböden), aber auch im Falle von geänderten Lasten am Stativ, Kraft- bzw. Drehmomente auftreten können, die Teile des Stativs - insbesondere den Stativarm - in ungebremstem Zustand zu einem Driftverhalten bewegen. Unter Driftverhalten sind seitliche Schwenkbewegungen (um eine Rotationsachse) oder Tendenzen zu solchen Schwenkbewegungen des Tragarms zu verstehen, die für den Anwender unerwünscht sind.

Der Stand der Technik kennt drei unterschiedliche Massnahmen zur Reduktion des Driftverhaltens:
1. Ausrichtung des Stativfusses: Wenigstens drei von z.B. vier Abstützfüssen des Stativfusses werden in ihrer Höhe einstellbar gemacht und eine Libelle am Stativfuss gibt dessen horizontale Ausrichtung an. Eine solche Einrichtung ist beispielsweise beim FM2 der Firma Mitaka realisiert. Das gewährleistet eine präzise Einstellmöglichkeit, ist jedoch nicht frei von folgenden Nachteilen: Da es sich um eine Dreipunkteinstellung handelt, führt die Verstellung an einem der drei Punkte zu einem Nachstellbedarf bei den anderen zwei Einstellpunkten. Ungeübte Personen haben es sehr schwer, die Einstellarbeit rasch und zielsicher zu erledigen.
   Dazu kommen weitere Nachteile: Erstens erfolgt die Einstellung des Stativfusses in einer gebückten Haltung in Fussbodennähe.
   Zweitens muss nach jedem Ortswechsel und ggf. sogar nach jedem Lastwechsel am Stativarm eine neue Einstellung vorgenommen werden und zwar in der Regel an allen drei bzw. bei allen vorhandenen Einstellvorrichtungen.
   Drittens zwingt der Anbringungsort der Einstellvorrichtungen das Bedienpersonal beim Einstellen zur Vornahme von Handlungen in Bodennähe, d.h. in einen Bereich, der in einem Operationssaal vom Patienten entfernt ist und eine schlechtere Sterilitätsklasse aufweist.
   Weiterhin könnte eine Hilfsperson extra dafür nötig sein, um die Einstellarbeiten vorzunehmen, während es wünschenswert wäre, eine Einstellung durch den Chirurgen oder eine OP-Schwester selbst erledigen zu können.
2. Die zweite bekannte Variante umfasst eine Bremse zur Drehreibungserhöhung. Mit einer solchen Bremse wird der Vorteil der Leichtgängigkeit absichtlich zunichte gemacht, um das Driftverhalten zu reduzieren. Für den Anwender bewirkt dies nachteiligerweise einen erhöhten Kraftbedarf beim Bewegen des Tragarms. Hoher Kraftaufwand macht für den Chirurgen das anschliessende Führen eines Skalpells, oder sonstiger Arbeiten, die einer ruhigen Hand bedürfen, erschwert möglich.
3. Die dritte bekannte Variante ist bisher lediglich bei Deckenstativen bekannt gemacht worden und hat mit dem eigentlichen Problem der Eigenschaftsänderungen im Driftverhalten durch unebene Böden oder dergleichen nichts zu tun, da bei einem Deckenstativ in der Regel von vornherein ein fixer Anbringungsort vorgesehen ist und eine Lageveränderung an der Decke nicht stattfindet. Bei der Herstellung des fixen Anbringungsorts wird dieser selbstverständlich optimal vermessen, sodass ein Deckenstativ grundsätzlich kein Driftverhalten hat. Die Einstellung entspricht dabei etwa einer Nivellierung eines Stativfusses am Fussboden, wobei nach dieser Einstellung keine Positionsänderung mehr vorgenommen wird. Andererseits ergibt sich durch die Belastung des Deckenstativs - ggf. mit unterschiedlichen Gewichten - eine andere Gefahr, die wiederum Driftverhalten erzeugen kann:

Durch die beschränkte Steifigkeit eines herkömmlichen horizontalen Stativarms, der an einem vertikalen Träger befestigt ist, kommt es beim Abwinkeln eines weiteren an diesem dieses horizontalen Tragarm befestigten Stativarms um eine vertikale Schwenkachse aufgrund des Gewichts des weiteren Tragarmes und des an ihm befestigten Mikroskops zu einer Torsion am ersten Tragarm. Umgekehrt kommt es beim gestreckten Stativarm zu einer Biegebelastung am Stativarm. Ziel und Lösung beim Deckenstativ war es, einen Zustand zu erreichen, bei dem das Mikroskop sowohl in der abgewinkelten Position der Stativarme als auch in der gestreckten Position derselben, auf dem gleichen Höhenniveau liegt. Nachdem diese Einstellung getroffen wurde, bleibt sie im Prinzip unverändert. Eine Lageveränderung eines der Stativarme ändert das Verhalten nicht. Positionsänderungen an der Decke finden nicht statt.

Nähere Untersuchungen bei bekannten Stativaufbauten, wie z.B. jenen der Dräger-Serie (Die Fa. Dräger/Deutschland brachte unter den Produktbezeichnungen "Movita", "Julian" eine Serie von Deckenstativen auf den Markt, die in der Intensivmedizin und -pflege angewendet werden.) oder jener der Firma Kreuzer/Deutschland bieten keine Lösungsansätze, da bei diesen Deckenstativen die Schwenkbeweglichkeit für Operationsmikroskope mit vergrössernden Eigenschaften nicht im Vordergrund stehen.
Grössere Reibungskräfte in Drehlagern verhindern jedoch das Aus-der-Position-Laufen, sodass bei bekannten intensivmedizinalen Deckenstativen schon gar nicht erst das eben erwähnte Problem auftritt. Gerade bei Mikroskopstativen wird jedoch verlangt, dass das Gerät bei geöffneten Bremsen nicht driftet, aber besonders leichtgängig bewegt werden kann. So gibt es z.B. Mundschalter, mit denen der Chirurg mit seinen Lippen einerseits die Bremsen löst und andererseits das Mikroskop neu positioniert.

In der erwähnten veröffentlichten Patentanmeldung EP-A-1067419 ist in den Figuren 5-7 und in den dazugehörigen Beschreibungsteilen ein solcher bekannter Mechanismus zum Driftverhindern bei Deckenstativen geoffenbart. Diese bekannte Driftverhinderungseinrichtung wirkt - bedarfsgemäss - nur in einer Ebene. Da seitliche Unebenheiten infolge der einmalig und endgültig ausnivellierten Anbringungsstelle an der Decke nicht auftreten, gab es bisher auch keinen Bedarf, weitere Nivellier- oder Driftausgleichsmassnahmen an einem Deckenstativ vorzusehen. Insofern bietet diese an sich bekannte Lehre für den Fachmann auch gar keine Anregung, dafür zu sorgen, dass eine Verbesserung von Bodenstativen hinsichtlich dem eingangs erwähnten Problem, nämlich, dass nach einer Ortsänderung von Bodenstativen in der Regel geänderte Neigungslagen des Stativfusses auftreten, geschaffen wird.

Der Erfindung liegt somit die Aufgabe zugrunde, eine optimale Einstellbarkeit zur Driftvermeidung an einem Stativ zu finden, ohne dass die Leichtgängigkeit des Stativs beeinträchtigt wird. In einem weiteren Schritt sollte eine Möglichkeit gefunden werden, die Driftausgleichseinstellung rascher und einfacher als bisher und ohne sich bücken zu müssen, vorzunehmen.

Grundidee ist hierbei das Ins-Lot-Stellen der Achse, um die der Horizontaltragarm bei nicht justiertem Aufbau aufgrund der Gravitation driften würde.

Gelöst wird die Aufgabe durch die Anwendung der Merkmale des Anspruchs 1, in dem wenigstens eine vertikale Drehachse oder wenigstens ein vertikales Drehlager des Stativs gegenüber dem Stativfuss unabhängig von der Lage der Ständersäule in wenigstens zwei Ebenen verstellbar in eine vorzugsweise lotrechte Lage gebracht werden kann.

Unter Stativfuss sind alle jene Vorrichtungen zu verstehen, die ein Stativ gegenüber dem Fussboden abstützen. Das können herkömmliche Stativfüsse, aber auch Wagen, Laufkatzen o.dgl. sein. Unter Ständersäule sind nicht bloss herkömmliche vertikale Säulen an einem Stativfuss zu verstehen, sondern auch Tragarme o.dgl., die an Schienen, Laufkatzen o.dgl. bewegbar sind.

Gemäss einem bevorzugten erfindungsgemässen Stativaufbau sind Drehachse und Drehlager in oder an der Ständersäule angeordnet und die Verstellbarkeit wird vorzugsweise durch Stellschrauben gewährleistet, welche vorzugsweise in einer Horizontalebene und um ca. 90 Grad versetzt angeordnet sind.
Diese Stellschrauben sind vorzugsweise in der Ständersäule schraubgelagert und beaufschlagen das Schwenklager direkt.

Eine weitere mögliche Ausgestaltung eines erfindungsgemässen Stativaufbaus sieht vor, dass zwischen dem Drehlager und dem Lagerrohr bzw. Tragarm eine elastische Zwischenschicht angeordnet ist.

Das Drehlager und/oder die Schwenkachse sind des Weiteren gemäss einer bevorzugten Ausgestaltung der Erfindung durch ein axiales Dreh-Schwenklager direkt oder indirekt gegenüber der Ständersäule abgestützt.

Eine weitere mögliche Ausgestaltung eines erfindungsgemässen Stativaufbaus sieht motorische Fernbedienbarkeit vor. Hierbei sollen alle beweglichen Teile, die an der Einstellung des Stativs beteiligt sind, insbesondere Gewindespindeln, Stellschrauben motorisch fernbedienbar sein. Weiterhin bevorzugt ist es, dass im Stativaufbau eine Automatik vorgesehen ist, welche mittels elektronischer Libellen, Neigesensoren und/oder Winkelsensoren und/oder ähnlichen Elementen, welche vorzugsweise auf das Schwenklager mittelbar oder unmittelbar vorzugsweise prozessorgesteuert einwirken.

Des Weiteren entspricht es einer weiteren bevorzugten Ausgestaltung, dass zwischen wenigstens einer Handhabe im Sinne einer Stellschraube oder einem Motor o.ä. und dem verschwenkbaren Drehlager ein Getriebe angeordnet ist.

Eine weitere bevorzugte Ausgestaltung eines erfindungsgemässen Stativaufbaus sieht vor, dass die Ständersäule in ihrer Relativlage zum Ständerfuss beweglich und einstellbar und/oder steuerbar ist.

Weitere Ausbildungen und Weiterentwicklungen der Erfindung sind in den abhängigen Patentansprüchen und der Figurenbeschreibung angegeben.

### Figurenbeschreibung

Anhand von Skizzen wird die Erfindung beispielhaft näher erläutert.
Fig.1 zeigt einen einfachen Stativaufbau mit Stativfuss und Ständersäule und Schwenkarm;
Fig.2 zeigt symbolisch ein einstellbares vertikales Drehlager;
Fig.3 ein solches einstellbares Drehlager in einem horizontalen Tragarm (geschnitten)
Fig.4 die Draufsicht auf den Aufbau nach Fig.3, teilweise geschnitten;
Fig.4a einen Stativaufbau mit Spindeln und x/z- und y/z-Schlitten;
Fig.5 eine Variante eines schwenkbaren Drehlagers an einer Ständersäule;
Fig.6 die Variante nach Fig.5 aus einer anderen Perspektive;
Fig.7 die Variante aus Fig.5 in der Draufsicht;
Fig.8 den Aufbau nach Fig.5 mit teilweise entfernten Bauteilen;
Fig.9 den Aufbau nach Fig.5 aus einer anderen Sicht mit einem elektrischen Antrieb zur Drifteinstellung;
Fig.10 den Aufbau nach Fig.9 in einer anderen Sicht mit abgenommenem Motor;
Fig.11 eine Variante des Aufbaus nach Fig.3 mit automatisch einstellbarem Driftausgleich;
Fig.12 ein Beispiel eines erfindungsgemässen Stativs in Gesamtansicht;
Fig.13 den erfindungsgemässen Aufbau als schematisches Drahtmodell und
Fig.14 ein Detail des Drahtmodells.

Die Figuren werden übergreifend beschrieben, gleiche Bezugszeichen bedeuten gleiche Bauteile, Bezugszeichen mit gleichen Nummern, jedoch unterschiedlichen Indizes bedeuten geringfügig unterschiedliche Bauteile mit gleichen Aufgaben bzw. ähnlichen Wirkungen.

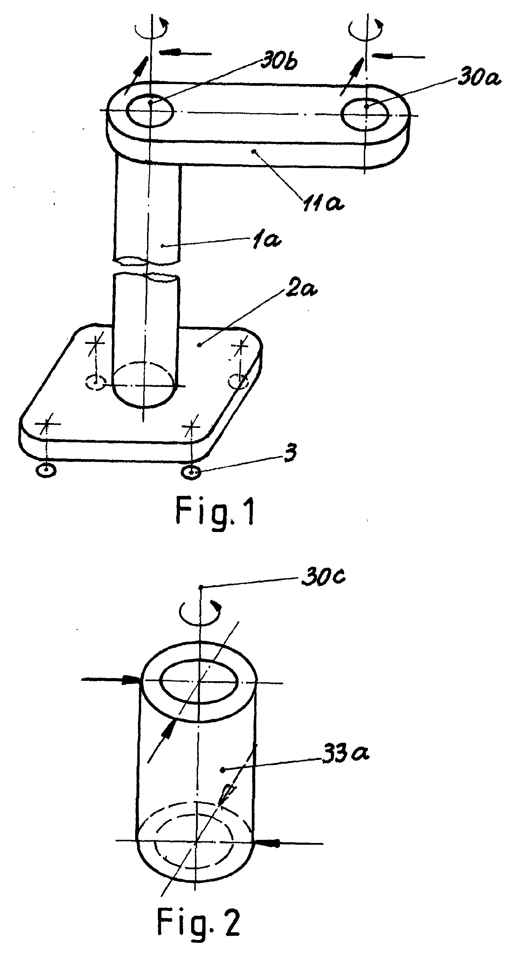

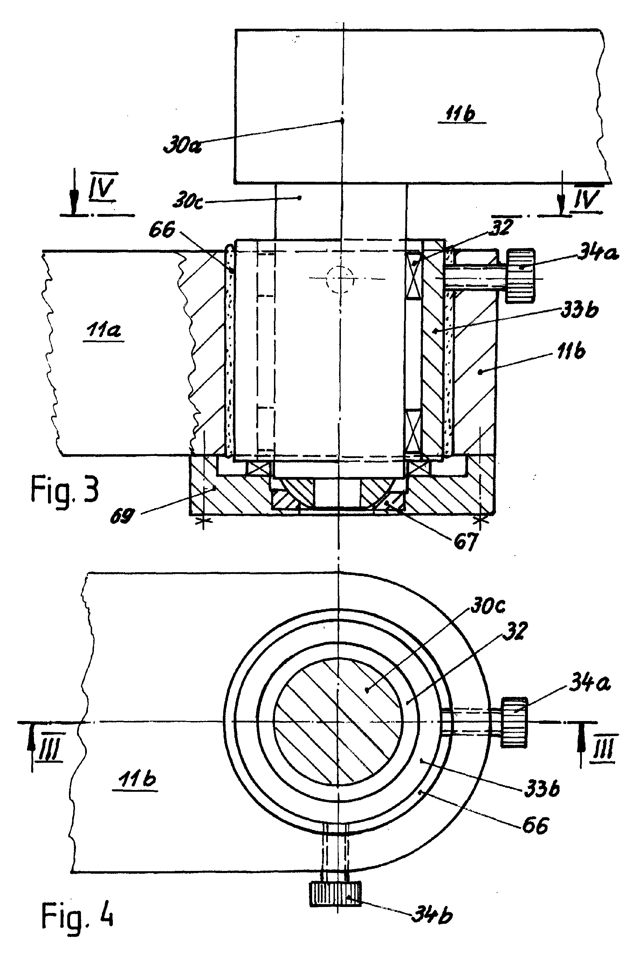

Wie aus Fig.1 ersichtlich, geht es grundsätzlich um senkrechte Achsen 30a, b, die einerseits direkt an der Ständersäule 1a, andererseits aber auch an einem Tragarm des Stativs 11a (wie z.B. in Fig.3 dargestellt) angeordnet sein können, bzw., wie aus Fig.2 ersichtlich, um ein Drehlager 33a, das eine solche Schwenkachse 30c aufnimmt, bzw. definiert. Erfindungsgemässes Ziel beim Einstellen der Achsen 30 bzw. Schwenklager 33 ist das Ins-Lot-Bringen derselben durch manuelle oder motorisch gesteuerte Einstellvorgänge.

Fig.3 zeigt symbolisch den Aufbau einer Verstelleinrichtung, bei der mittels einer Verstellschraube 34a das Lagerrohr 33b gegen eine elastische Zwischenschicht 66 gedrückt werden kann, weil das Lagerrohr 33b in einem Drehschwenklager 67 beweglich gehalten ist. Anstelle einer direkten Montage auf einer Ständersäule, ist der Tragarm 11b an einem anderen Tragarm 11a abgestützt, der auf einer Ständersäule oder auch z.B. in einer Wandschienenhalterung beweglich gehalten ist. Da die erfindungsgemäss zu lösende Problematik der Änderung im Driftverhalten nur dann auftritt, wenn der örtliche Aufstellungspunkt in Bezug auf den Boden geändert wird und dabei Drehachsen aus dem Lot kommen können, scheiden Deckenstative aus der Betrachtung aus. Andererseits ist im Sinne der Erfindung ein Tragarm 11a zumindest mit seinem Drehschwenklager 67 als Ständersäule zu verstehen. Andererseits könnte ein solches Drehschwenklager 67 auch direkt in einer Ständersäule eingebaut sein.

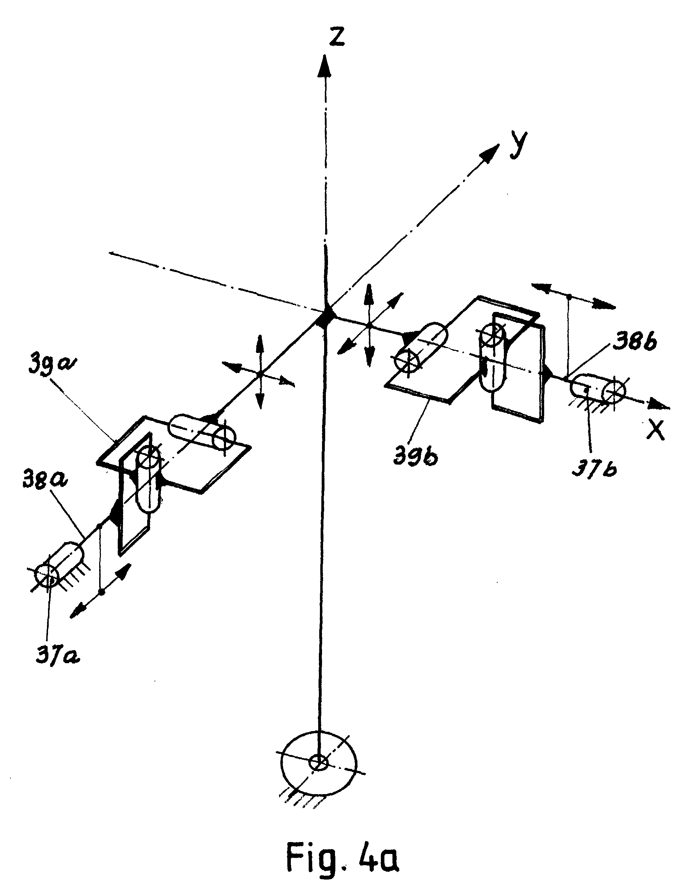

In Fig.4 sieht man, dass zwei oder mehr Verstellschrauben 34 das Lagerrohr 33b innerhalb der elastischen Zwischenschicht 66 bewegen können.

Fig.4a zeigt symbolisch den Aufbau einer Verstellvorrichtung, die mit zwei Spindeln 38a und 38b auskommt, die je innerhalb einer axial fest gelagerten Mutter 37a bzw. 37b angeordnet sind (z.B. in einem Ständerrohr). Dadurch ist sowohl eine Stoss- (wie in Fig.3 und 4 mit Verstellschraube 34) als auch eine Zugbewegung ermöglicht. Zum Ausgleich von Relativbewegungen ist ein x/z- Schlitten 39a bzw. ein y/z-Schlitten 39b vorgesehen. Diese Schlitten 39a,b verhindern, dass bei einer Einstellung auf einer Seite, die andere Seite mitbeeinflusst wird, da die Schlittenlager eine Schwenkbewegung der z-Achse, die von einer Seite angeregt wird, tolerieren.

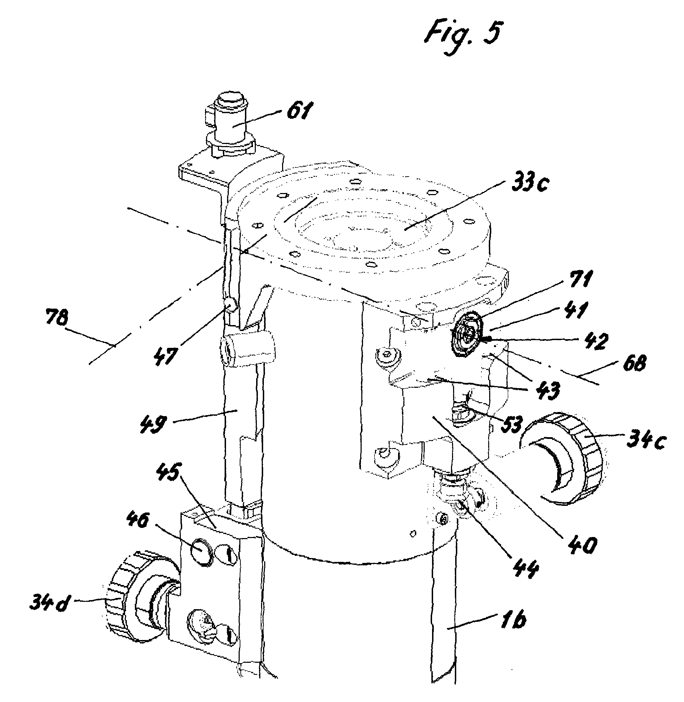

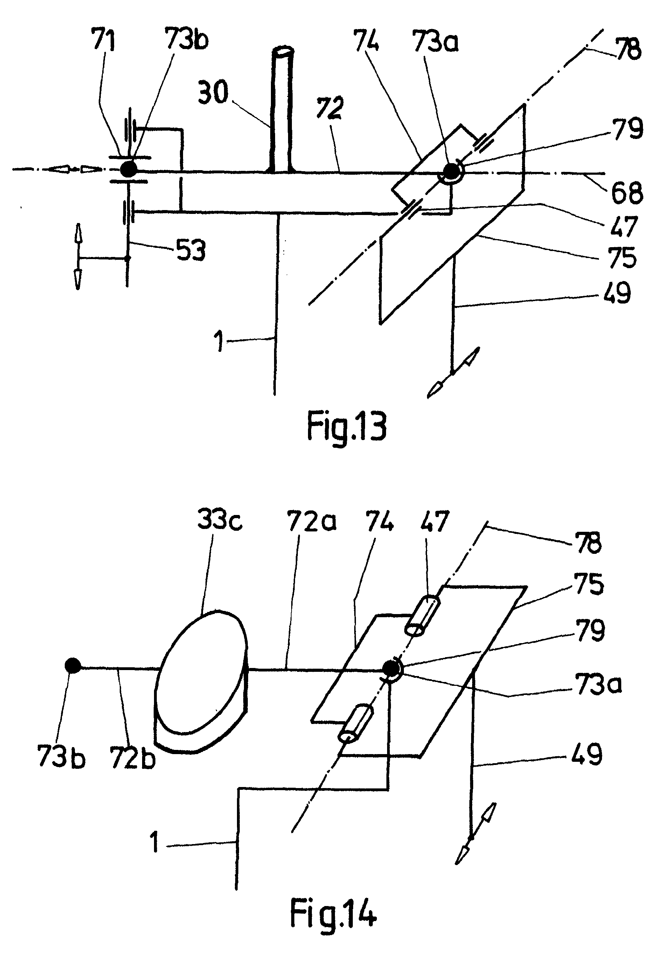

Fig.5 zeigt eine Ausbildungsvariante eines Drehschwenklagers, bei welchem mit Hilfe von zwei Verstellschrauben 34c und 34d eine Lagerhülse 33c so ausgerichtet werden kann, dass der Messsensor 61 (sphärische Libelle) anzeigt, dass die Lagerhülse 33c im Lot ist. Der Messsensor ist mit der Lagerhülse 33c starr verbunden. Letztere ist um eine Achse 78 und um eine Achse 68 schwenkbar. Das Prinzip dieser Schwenkbarkeit ist in den Figuren 13 und 14 dargestellt:

Ein sphärisches Lager 79 bildet den zentralen Anlenkpunkt für eine Achse 72, die das Schwenklager 33c in der Ständersäule 1 trägt. Das Lager 79 ist an der Ständersäule 1 gehalten oder ausgebildet und nimmt eine Kugel 73a auf, die mit der Achse 72 starr verbunden ist. Gleichzeitig starr verbunden mit dieser Achse ist ein Bügel 74, der an beiden Enden einen Schwenkbügel 75 lagert. Der Schwenkbügel 75 ist mit einer Schwenkzunge 49 verbunden. Ein Verschwenken der Schwenkzunge 49 führt zu einem Schwenken der Achse 72 um ihre eigene Achse 68 bzw. um die Kugel 73a. Wie in Fig.14 zu sehen, ist beim ausgeführten Beispiel die Lagerhülse 33c mittels Achsstummeln 72a und 72b gehalten, die die Achse 72 ersetzen. Aus Fig.14 sieht man auch, dass ein Schwenken der Schwenkzunge somit die Lagerhülse 33c schwenkt.

Um nun diese Lagerhülse 33c auch noch in einer Querrichtung schwenkbar zu machen, ist das Ende der Achse 72 zum Beispiel über eine Kugel 73b ebenso in einem Gleitlager 71 gehalten, in dem es sowohl in Achsrichtung hin und her schwenken, als auch um seine Achse 68 drehen kann. Das Gleitlager 71 ist mittels Gewindespindel 53 in seiner Höhen-Relativlage zur Ständersäule 1 verschiebbar. Bei dieser Verschiebung schwenkt die Achse 72 im sphärischen Lager 79, ohne den Schwenkbügel 75 zu beeinflussen.

Die Erzeugung der Schwenkbewegung um die beiden Achsen 68 bzw. 78 wird beim bevorzugten Ausführungsmodell gem. Fig.5 durch Drehen von Verstellschrauben 34c bzw. 34d erzielt, die über herkömmliche Kegelzahnradgetriebe o.dgl. auf einerseits die Schwenkzunge 49 und andererseits auf die Gewindespindel 53 wirken.

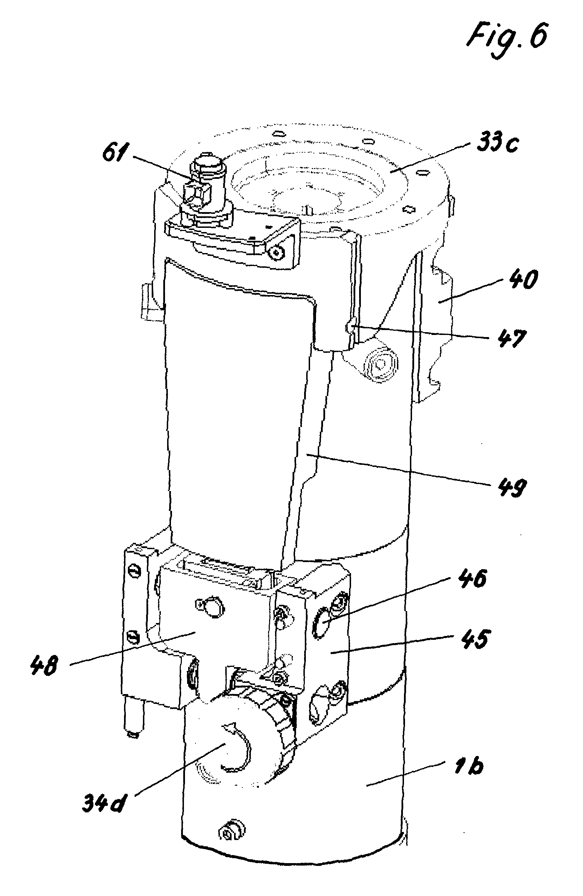

Fig.6 zeigt die gleiche Ausbildungsvariante aus einer anderen Perspektive, wobei ein Schiebeglied 48 sichtbar ist, das durch Drehen an der Schraube 34d seitlich verschoben wird und die Schwenkzunge 49 mitnimmt, die im Schiebeglied 48 hoch- und tief-gleitbar gelagert ist. Das Schiebeglied 48 ist entlang einer Schiebeachse 46 verschiebbar, die in einem ständersäulen-achsenfesten Halteblock 45 gehalten ist.

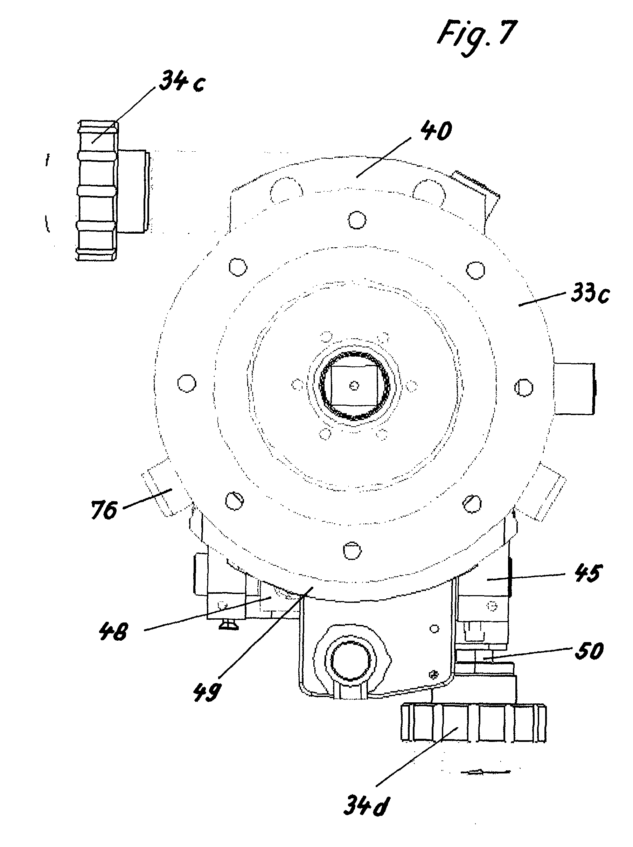

Fig.7 zeigt eine Draufsicht darauf.

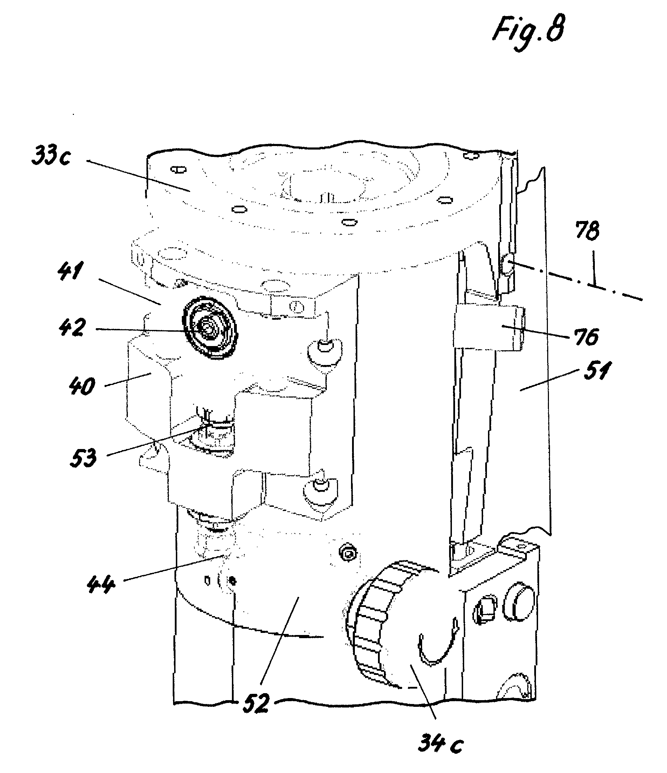

In Fig.8 ist die gleiche Ausbildungsvariante mit teilweise abmontierten Bauteilen dargestellt. Man sieht bei dieser Darstellung, dass die Verstellschraube 34c mittels eines Kegelzahnradgetriebes 44 eine Gewindespindel 53 antreibt. Über den vertikalen Teil des Kegelzahnradgetriebes 44 wird die Spindel 53 angetrieben, die den Schieber 41 in seiner Höhe verstellt und dadurch ein Verschwenken der Lagerhülse 33c um die Achse 78 bewirkt. Die Spindel 53 ist in einem Führungsblock 40 gelagert und könnte auch direkt von einem Motor angetrieben werden.
Weiters sieht man einen Teil der Abdeckung 51, die die Aussenseite der Ständersäule bildet und an Befestigungszapfen 76 befestigt werden kann.

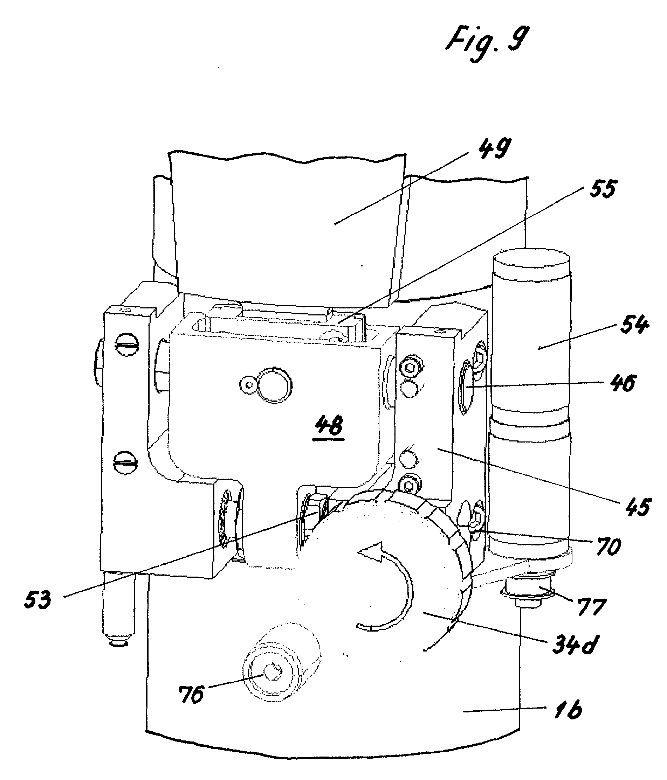

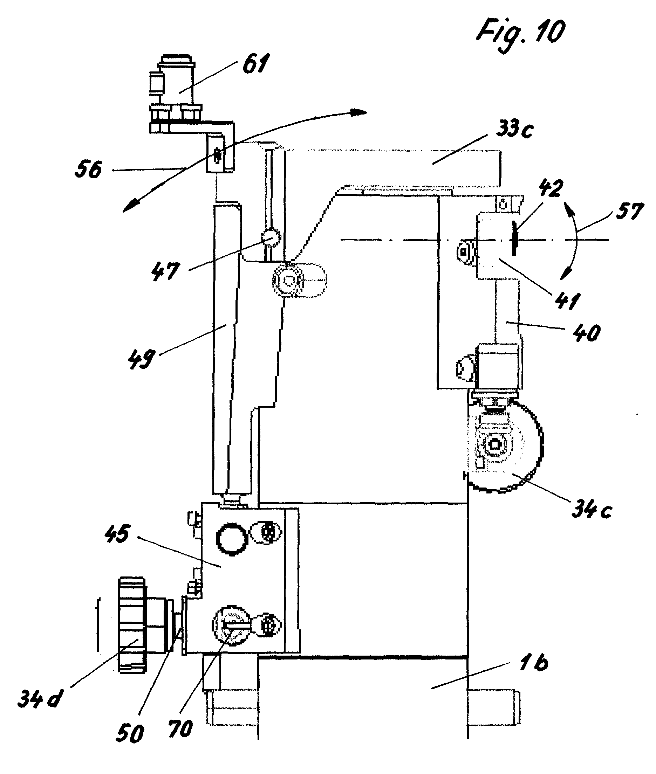

Fig.9 und 10 zeigen den Aufbau gemäss Fig.5 mit montiertem und mit abgenommenem Stellmotor 54. Ein vergleichbares Kegelzahnradgetriebe 44b treibt eine Spindel 53b an, die den Schieber 48 um seine Achse 68 schwenkt. Der Motor hat in seinem unteren Bereich ein Zahnriemenritzel, über das ein Zahnriemen geschlungen werden kann, um die nicht näher dargestellte Verbindung zum Verstellgetriebe im Lagerblock 45 herzustellen. Da die Details dieses Aufbaus einem Fachmann geläufig sind und beliebige Varianten denkbar sind, ist eine nähergehende Erläuterung überflüssig.

Ein gleichzeitiges Verstellen der beiden Spindel 53 bzw. der Welle 50 führt somit zu einem Verschwenken der Lagerhülse 33c schräg zu den Achsen 78 und 68. Das Verschwenken um jede der Achsen 78 und 68 darf unabhängig gemacht werden und beeinflusst die jeweilige andere Schwenklage nicht. Im Gegensatz zu anderen ähnlichen Nivelliereinstellvorrichtungen ist die Verstellbarkeit somit vergleichbar mit einem einfachen x-y-Schlitten - allerdings schwenkend - realisiert, was somit die Bedienbarkeit auch für ungeübte Personen wesentlich erleichtert. Weiter vereinfacht wird dieser Aufbau durch das Ersetzen der handbetriebenen Verstellschrauben 34c und 34d durch elektrische Antriebe 54, die wie beispielhaft in Fig. 9 angedeutet sind, die jedoch auch anders aufgebaut und angeordnet sein können.

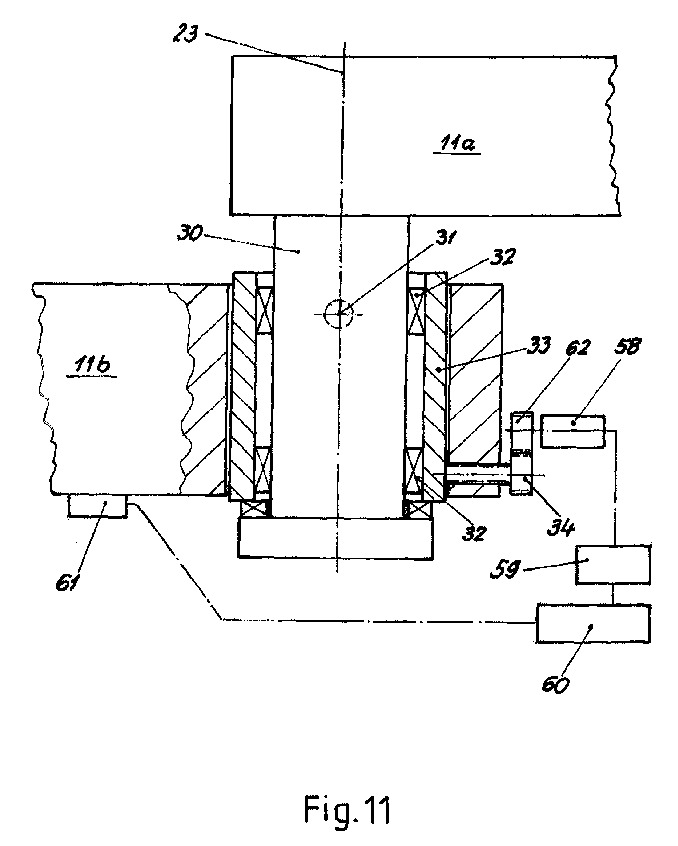

Fig.11 zeigt symbolisch und vereinfacht, ohne auf das Schwenklager einzugehen, noch einmal den Aufbau gemäss Fig.3, wobei die Verstellung des Lagerrohrs 33 hier automatisch durch die Auswertung der Daten des Winkelsensors 61a bzw. elektronische Libelle bzw. elektronischer Neigesensor durch den Rechner 60 und entsprechende Befehle an die Steuerung 59 mittels nur angedeuteter Antriebe 58 erfolgt.

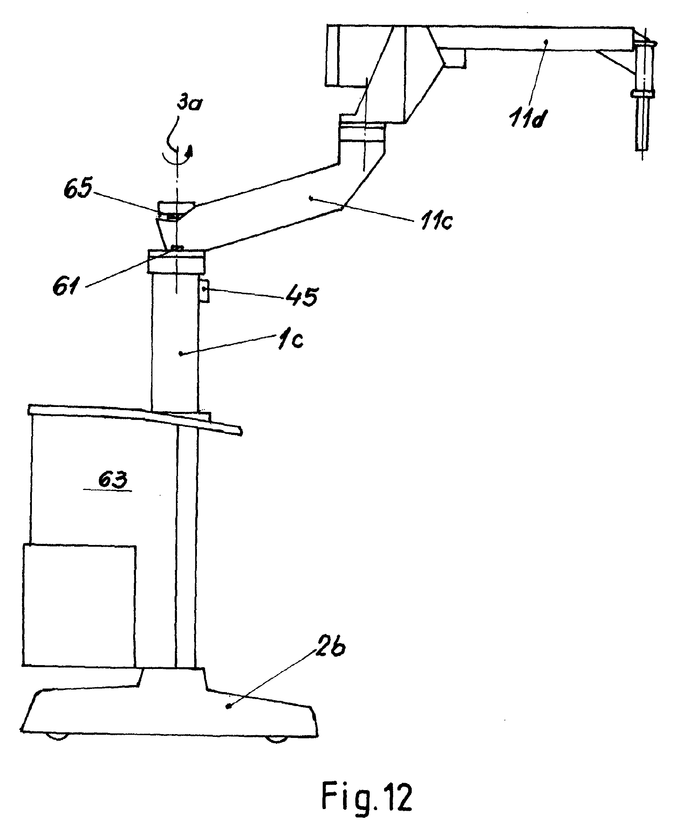

Fig.12 zeigt die beispielhafte, Gesamtansicht eines erfindungsgemässen Stativs mit einem Stativfuss 2b, einer Ständersäule 1c, einem Gerätekasten 63, der aufgrund seiner Anordnung auch der Verbesserung der Kippsicherheit dient. 65 gibt eine Bremse an, die die Rotation des Tragarmes 11 c um die vertikale Achse 30c im gebremsten Zustand verhindert. Der Tragarm 11c trägt einen weiteren Stativarm, wie er in der Deutschen Patentanmeldung DE 200 19 107 angegeben ist. Die dort in den Figuren und zugehörigen Figurenbeschreibungen angegebenen Besonderheiten und technischen Ausbildungen gelten als hierin ebenso geoffenbart.

Die nachfolgende Bezugszeichenliste ist Bestandteil der Beschreibung und ergänzt die Figurenbeschreibung. Die in den Patentansprüchen angegebenen Aufbauten, Vorrichtungen und Details gelten ebenso als im Rahmen der Beschreibung geoffenbart.

Auf die am gleichen Tag eingereichte Patentanmeldung DE 101 15 837 wird Bezug genommen, weil dort ein möglicher weiterer Aufbau eines erfindungsgemässen Stativs mit anderen Details näher beschrieben ist. Die Lehren beider Patentanmeldungen sind miteinander kombinierbar.

### Bezugszeichenliste

1 a, b, c - Ständersäule
2 a, b - Stativfuss
3 - Mutter
4 - Operationsmikroskop
5 - Hilfsstativ
6 - Rechner
7 - Steuerung
8 - Energiequelle
9 - Tragarm
10 - Ausgleichsarm
11 a, b, c, d - Tragarmteil
12 a, b - Distaler Tragarmteil
13 - Deckenkonsole
14 - Tragsäulen
15 - Tragplatte
16 - Fester Gebäudeteil, Decke
17 a, b, c - Dämpfende Schicht
18 a, b, c - Nicht dämpfende Schicht
19 - Dämpfende Schnittstelle, Dämpfungselement
20 - Glasfaserkabel
21 - Apparateschrank
22 - Brücke
23 - Senkrechte Achse
24 - Konsole
25 - Display
26 - Bedienelemente
27 - Gasdruckfeder
28 - Einstellmittel
29 - Schwenkteil
30 a, b, c - Tragachse
31 - Kardanische Aufhängung
32 - Lager
33 a, b, c - Lagerhülse
34 a, b, c, d - Verstellschraube (Handhabe, Bedienorgan)
35 - Brücke
36 - Dämpfungszapfen
37 a, b - Mutter
38 a, b - Spindel
39 a, b - x/z-Schlitten
39 b - y/z-Schlitten
40 - Führungsblock
41- Lagerblock
42 - Lager
43 - Führungsstange
44 - Kegelzahnradgetriebe
45 - Halteblock
46 - Schiebeachse
47 - Schwenkachse
48 - Schiebeglied
49 - Schwenkzunge
50 - Welle
51 - Abdeckschale
52 - Wellenführung
53 - Gewindespindel
54 - Stellmotor
55 - Mitnahmeteil
56 - Pfeil
57 - Pfeil
58 - Motor
59 - Steuerung
60 - Rechner
61 - Messsensor
62 - Getriebe
63 - Gerätekasten
64 - Griff
65 - Bremse
66 - Elastische Zwischenschicht
67 - Drehschwenklager
68 - Achse
69 - Gehäuse
70 - Getriebe
71 - Gleitlager
72 - Achse
73 - a, b Kugel
74 - Bügel
75 - Schwenkbügel
76 - Befestigungszapfen
77 - Zahnriemenritzel
78 - Achse
79 - Sphärisches Lager
III,IV - Schnittebene

## Patentansprüche

1. Stativ, insbesondere für ein Operationsmikroskop, mit wenigstens einer vertikalen Drehachse **(30)** oder einem Drehlager **(33),** an der oder in dem ein Schwenkarm **(11)** schwenkbar ist, mit einer Ständersäule **(1)** und einem Stativfuss **(2), dadurch gekennzeichnet, dass** die Drehachse **(30)** oder das Drehlager **(33)** gegenüber dem Stativfuss **(2)** in jeweils wenigstens zwei aufeinander senkrecht stehenden Ebenen schwenkbar einstellbar ist.

2. Stativ, insbesondere für ein Operationsmikroskop, mit wenigstens einer vertikalen Drehachse **(30)** oder einem Drehlager **(33),** an der oder in dem ein Schwenkarm **(11)** schwenkbar ist, mit einer Ständersäule **(1)** und einem Stativfuss **(2), dadurch gekennzeichnet, dass** die Drehachse **(30)** oder das Drehlager **(33)** um zwei Schwenkachsen **(66, 78)** schwenkbar ist, wobei eine der beiden Schwenkachsen **(66)** durch die Drehachse **(30)** oder durch das Drehlager **(33)** geht und die andere Schwenkachse **(78)** seitlich der Drehachse **(30)** oder des Drehlagers **(33)** angeordnet ist.

3. Stativ nach Anspruch 2, **dadurch gekennzeichnet, dass** die Schwenkbarkeit um die Achsen **(68, 78)** durch von diesen Achsen **(68, 78)** entfernte manuelle oder motorische Bedienorgane **(34c, 34d)** steuerbar ist.

4. Stativ nach Anspruch 3, **dadurch gekennzeichnet, dass** eine der Achsen **(68)** an einem Ende mit einem sphärischen Festlager **(79)** an der Ständersäule **(1)** festgelegt ist, während die andere Achse **(78)** virtuell durch den Mittelpunkt des sphärischen Festlagers **(79)** geht und im bzw. am Schwenklager **(33c)** gelagert ist und dass vorzugsweise virtuell durch den Mittelpunkt des sphärischen Festagers **(79)** senkrecht zur Achse **(68)** eine Führungsstange **(47)** angeordnet ist, an der ein Schwenkhebel **(49)** angreift, der mit dem Schwenklager **(33c)** gelenkig verbunden ist, wobei die Führungsstange **(47)** axial mit der Achse **(78)** fluchtet.

5. Stativ nach einem der vorhergehenden Ansprüche, **dadurch gekennzeichnet, dass** die motorische Fernbedienbarkeit eine Automatik enthält und vorzugsweise durch eine elektronische Libelle **(61),** durch einen Neigesensor oder einen Winkelsensor prozessorgesteuert arbeitet.

6. Stativ nach einem der vorhergehenden Ansprüche, **dadurch gekennzeichnet, dass** die Verstellbarkeit durch vorzugsweise in einer Horizontalebene angeordnete, um wenigstens annähernd 90 Grad versetzte Stellschrauben **(34)** gewährleistet wird und dass die Stellschrauben **(34)** in der Ständersäule **(1)** schraubgelagert sind und das Schwenklager **(33)** direkt beaufschlagen.

7. Stativ nach einem der vorhergehenden Ansprüche , **dadurch gekennzeichnet, dass** zwischen dem Drehlager **(33b)** und dem Schwenkarm **(11a)** eine elastische Zwischenschicht **(66)** angeordnet ist.

8. Stativ nach einem der vorhergehenden Ansprüche, **dadurch gekennzeichnet, dass** zwischen wenigstens einer Handhabe **(34)** oder einem fernbedienbaren Motor **(54)** mit einer Gewindespindel **(53)** und dem verschwenkbaren Drehlager **(33)** ein Getriebe **(44)** angeordnet ist.

9. Stativ nach einem der vorhergehenden Ansprüche, **dadurch gekennzeichnet, dass** die Handhaben **(34)** motorisch fernbedienbar sind.

10. Stativ nach einem der vorhergehenden Ansprüche, **dadurch gekennzeichnet, dass** die Ständersäule **(1)** in ihrer Relativlage zum Ständerfuss **(2)** beweglich und einstellbar und/oder ggf. steuerbar ist.
